# EUROPEAN PATENT APPLICATION

(11) **EP 4 524 699 A1**
(43) Date of publication of application: **19.03.2025**
(21) Application number: 22945619.9
(22) Date of filing: 16.12.2022
(51) Int. Cl.: G06F 3/04817

(54) **DISPLAY METHOD AND APPARATUS FOR INTERFACE ELEMENT, AND ELECTRONIC DEVICE AND STORAGE MEDIUM**

(30) Priority: 09.06.2022 CN 202210658984
(71) Applicant: GUANGDONG OPPO MOBILE TELECOMMUNICATIONS CORP., LTD., Dongguan, Guangdong 523860 (CN)
(72) Inventor: FU, Qi, Dongguan, Guangdong 523860 (CN)
(74) Representative: Novagraaf Technologies
(86) International application number: PCT/CN2022/139531
(87) International publication number: WO 2023/236491

(57) **Abstract**

Disclosed in the embodiments of the present application are a display method for an interface element, and an electronic device and a storage medium. The method comprises: in response to an addition operation for a first interface element, adding the first interface element to an element folder, wherein the size of a second interface element of the element folder after the first interface element is added changes, so as to enable the size of the element folder before the first interface element is added to be the same as the size after the first interface element is added, the element folder is filled with the interface elements, and the second interface element is part or all of the interface elements in the folder before the first interface element is added. By implementing this method, interface elements can be flexibly added, so as to meet user requirements.

## Description

The application claims priority to Chinese Patent Application No.202210658984.7, filed on June 09, 2022 and entitled "DISPLAY METHOD AND APPARATUS, AND ELECTRONIC DEVICE AND STORAGE MEDIUM", the entire contents of which are incorporated herein by reference.

### TECHNICAL FIELD

Embodiments of the present disclosure relate to the technical field of electronic devices, in particular, to a display method for an interface element, a display apparatus for an interface element, an electronic device, and a storage medium.

### BACKGROUND

To save desktop space on electronic devices (such as mobile phones, tablets, etc.), most electronic devices support the grouping of interface elements (such as widgets, application icons, etc.), enabling multiple interface elements to be displayed in a single element folder.

However, in practice, it has been found that due to the limited size of an element folder, situations where interface elements cannot be successfully added to the element folder often arise. Thus, existing methods for grouping interface elements lack flexibility and fail to meet user needs.

### SUMMARY

Some embodiments of the present disclosure provide a display method for an interface element, a display apparatus for an interface element, an electronic device, and a storage medium, enabling interface elements to be added flexibly to meet user needs.

In a first aspect, some embodiments of the present disclosure provide a display method for an interface element, including:
adding, in response to an add operation for a first interface element, the first interface element to an element folder;
wherein after the first interface element is added, a size of a second interface element in the element folder changes, enabling a size of the element folder to remain the same before and after the first interface element is added, both the element folder before the first interface element is added and the element folder after the first interface element is added are fully filled with interface elements, and the second interface element is part or all of interface elements in the element folder before adding the first interface element.

In a second aspect, some embodiments of the present disclosure provide a display apparatus for an interface element, including:
a display unit, configured to add, in response to an add operation for a first interface element, the first interface element to an element folder;
wherein after the first interface element is added, a size of a second interface element in the element folder changes, enabling a size of the element folder to remain the same before and after the first interface element is added, both the element folder before the first interface element is added and the element folder after the first interface element is added are fully filled with interface elements, and the second interface element is part or all of interface elements in the element folder before the first interface element is added.

In a third aspect, some embodiments of the present disclosure provide an electronic device, including:
a memory, configured to store an executable program code; and
a processor, coupled to the memory;
wherein the processor is configured to execute the executable program code in the memory and enabled to implement the method in the first aspect.

In a fourth aspect, some embodiments of the present disclosure provide a computer-readable storage medium, storing an executable program code, wherein the executable program code is configured to be executed by a processor to implement the method in the first aspect.

In a fifth aspect, some embodiments of the present disclosure provide a computer program product, which, when running on a computer, enables the computer to perform any of the method in the first aspect.

In a sixth aspect, some embodiments of the present disclosure provide an application publishing platform, which is configured to publish a computer program product, where when the computer program product is run on a computer, it enables the computer to perform any of the method in the first aspect

The above technical solutions reveal that the present disclosure possesses the following technical effects.

In some embodiments of the present disclosure, adding, in response to an add operation for a first interface element, the first interface element to an element folder; wherein after the first interface element is added, a size of a second interface element in the element folder changes, enabling a size of the element folder to remain the same before and after the first interface element, both the element folder before the first interface element is added and the element folder after the first interface element is added are fully filled with interface elements, and the second interface element is part or all of interface elements in the element folder before the first interface element is added.

By automatically and adaptively adjusting the size of the second interface element in the element folder, the first interface element may be successfully added to the element folder without changing the size of the element folder. It may further ensure that the element folder remains to be fully filled with interface elements. Through the implementation of this method, the flexibility of adding interface elements may be increased, the desktop layout may be optimized, and user needs may be further met.

### BRIEF DESCRIPTION OF THE DRAWINGS

To illustrate the technical solutions of the embodiments of the present disclosure, a brief introduction to the drawings used in some embodiments of the present disclosure or the related art is provided below. It is evident that the drawings described below are only some of the embodiments of the present disclosure, and additional drawings may be derived based on these illustrations.
FIG. 1 is a schematic view of a scenario in some embodiments of the present disclosure.
FIG. 2A is a flowchart of a display method for an interface element in some embodiments of the present disclosure.
FIG. 2B is an illustration of adding an interface element in some embodiments of the present disclosure.
FIG. 3 is a flowchart of a display method for an interface element in some embodiments of the present disclosure.
FIG. 4A is another illustration of adding an interface element in some embodiments of the present disclosure.
FIG. 4B is another illustration of adding an interface element in some embodiments of the present disclosure.
FIG. 4C is another illustration of adding an interface element in some embodiments of the present disclosure.
FIG. 4D is another illustration of adding an interface element in some embodiments of the present disclosure.
FIG. 5A is an illustration of an element folder in some embodiments of the present disclosure.
FIG. 5B is another illustration of an element folder in some embodiments of the present disclosure.
FIG. 5C is another illustration of an element folder in some embodiments of the present disclosure.
FIG. 5D is an illustration of the element folder in FIG. 5C after performing a switch operation for the element folder.
FIG. 5E is another illustration of the element folder in FIG. 5C after performing a switch operation for the element folder.
FIG. 5F is an illustration of performing a move operation on an element folder.
FIG. 6 is a flowchart of another display method for an interface element in some embodiments of the present disclosure.
FIG. 7A is an illustration of removing an interface element in some embodiments of the present disclosure.
FIG. 7B is another illustration of removing an interface element in some embodiments of the present disclosure.
FIG. 7C is another illustration of removing an interface element in some embodiments of the present disclosure.
FIG. 7D is another illustration of removing an interface element in some embodiments of the present disclosure.
FIG. 8 is a schematic structural view of a display apparatus for an interface element in some embodiments of the present disclosure.
FIG. 9 is a structural block diagram of an electronic device in some embodiments of the present disclosure.

### DETAILED DESCRIPTION

Embodiments of the present disclosure provide a display method for an interface element, a display apparatus for an interface element, an electronic device, and a storage medium, which may enable the flexible addition of interface elements to meet user needs.

In order to enable those skilled in the art to better understand the technical solutions of the present disclosure, the technical solutions in the embodiments of the present disclosure will be described below in conjunction with the accompanying drawings. It is obvious that the described embodiments are only part of the embodiments of the present disclosure and not all of them. Any other embodiments based on the embodiments in the present disclosure should fall within the scope of protection of the present disclosure.

It is understood that the electronic devices involved in the embodiments of the present disclosure may include general handheld electronic devices with screens, such as mobile phones, smartphones, portable terminals, terminals, personal digital assistants (PDA), portable media player (PMP) apparatus, laptops, note pads, wireless broadband (Wibro) terminals, personal computers (PC), intelligent PCs, point of sales (POS) terminals, and in-vehicle computers, etc.

The electronic device may further include wearable devices. Wearable devices are portable electronic devices that can be wom directly by the user or integrated into the user's clothing or accessories. Wearable devices are not only hardware devices, but they can also be supported by software, data interaction, and cloud server interaction to realize strong intelligent functions such as a computational function, a positioning function, and an alarm function. Wearable devices may also be connected to mobile phones and various terminals. Wearable devices may include, but are not limited to, wrist-supported watch-type devices (such as watches, wristbands, etc.), foot-supported shoes-type devices (such as shoes, socks, etc.), head-supported glass-type devices (such as glasses, helmets, head strips, etc.), and smart clothing, backpacks, walking sticks, accessories, and other non-mainstream product forms.

Terms used in some embodiments of the present disclosure will be provided below.

A widget (Web widget) refers to a small element that may execute code on any HTML (HyperText Markedup Language) based webpage.

The widget is typically associated with a corresponding application program. The function the widget carried out is closely related to the corresponding application program. The widget may be displayed in a card style.

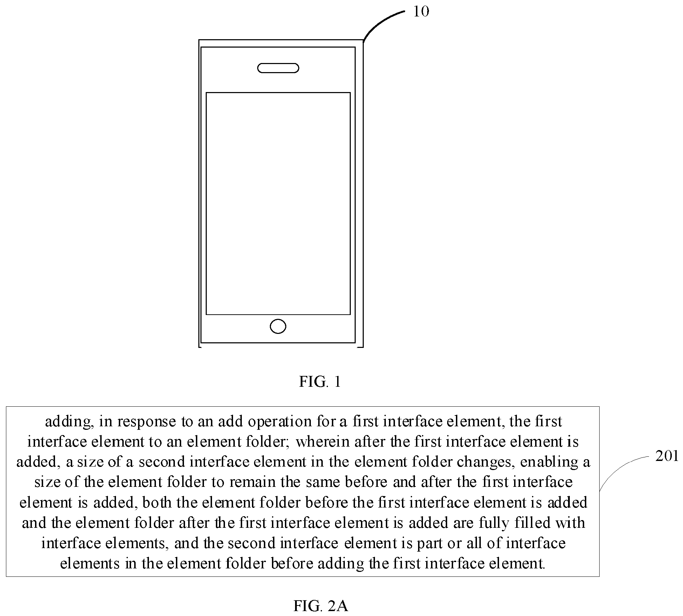

As shown in FIG. 1, FIG. 1 is a schematic view of a scenario in some embodiments of the present disclosure. As shown in FIG. 1, the scenario includes an electronic device 10. The electronic device 10 automatically and adaptively adjusts, in response to an add operation for a first interface element, a size of a second interface element in an element folder on a desktop of the electronic device 10. This allows for the successful addition of the first interface element to the element folder without changing a size of the element folder, while at the same time, ensuring the element folder remains fully filled with interface elements. This method improves the flexibility of adding interface elements, optimizes the desktop layout, and further meets user needs.

As shown in FIG. 2A, FIG. 2A is a flowchart of a display method for an interface element in some embodiments of the present disclosure. As shown in FIG. 2A, the display method for an interface element may include operations executed by the following blocks.

At block 201, in response to the add operation for the first interface element, the first interface element is added to the element folder. After the first interface element is added, the size of the second interface element in the element folder changes, enabling the size of the element folder to remain the same before and after the first interface element is added and both the element folder before the first interface element is added and the element folder after the first interface element is added are fully filled with interface elements. The second interface element refers to part or all of interface elements in the element folder before the first interface element is added.

The interface elements refer to a series of elements in a system interface that meet user interaction requirements. The interface elements may include, but are not limited to, one or more widgets, application icons, etc.

The first interface element may be any interface element on a desktop of an electronic device. The add operation for the first interface element may be triggered by a voice operation, a gesture operation, a touch operation, etc., which is not limited in the present disclosure. For example, the add operation for the first interface element may be moving the first interface element to a display position of another interface element.

In some embodiments, the above-mentioned element folder may be automatically generated by the electronic device in response to the add operation for the first interface element.

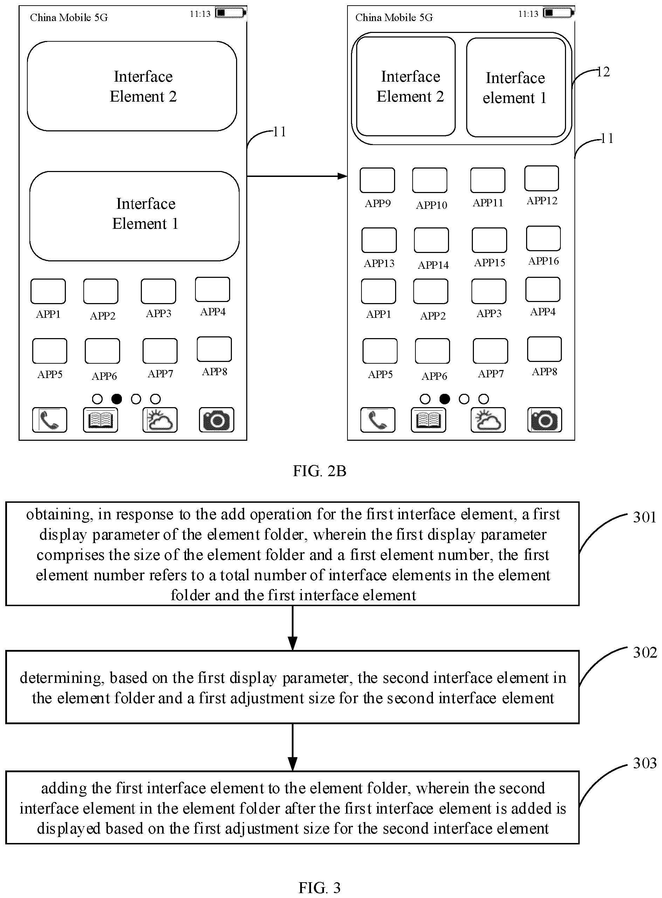

As shown in FIG. 2B, FIG. 2B is an illustration of adding an interface element in some embodiments of the present disclosure. The left image in FIG. 2B represents a desktop 11 of the electronic device before responding to the add operation for the first interface element. The desktop 11 includes a 4×2 interface element 2 and a 4×2 interface element 1. The right image in FIG. 2B represents a desktop 11 of the electronic device after responding to the add operation for the first interface element. The desktop 11 includes a 4×2 element folder 12 with a 2×2 interface element 2 and a 2×2 interface element 1 inside the element folder 12.

In some embodiments, the element folder mentioned above may be any element folder currently displayed on the desktop of the electronic device. The element folder may be manually selected by the user from the element folders currently displayed on the desktop of the electronic device. It may also be automatically selected by the electronic device from the one or more element folders currently displayed on the desktop, which is not limited in the present disclosure.

The operation by which the user manually selects the element folder may include, but is not limited to, a voice operation, a selection operation on any displayed element folder on the desktop of the electronic device, etc.

The following examples illustrate methods for the user to manually select the element folder.

In Example 1, after the first interface element is long-pressed by the user, the first interface element enters a drag state. When the dragging of the first interface element is stopped, an element folder having a position corresponding to a stop position of the first interface element is the element folder into which the first interface element is added.

In Example 2, after the first interface element is long-pressed by the user, a folder list pops up. The folder list may display a folder identifier for each of the element folders available to add the first interface element. The user may then select the element folder to which the first interface element will be added by clicking any of the folder identifiers. The folder identifier may include any one of numbers, letters, or special characters.

When the above-mentioned element folder is automatically determined by the electronic device in response to the add operation for the first interface element, then adding, in response to the add operation for the first interface element, the first interface element to the element folder may include: determining, in response to the add operation for the first interface element, a corresponding element folder of the first interface element, and adding the first interface element to the corresponding element folder.

In some embodiments, determining a corresponding element folder of the first interface element may include: determining an application category associated with the first interface element and using the element folder associated with the application category as the element folder for the first interface element.

For example, when the first interface element is a widget, the application category associated with the first interface element refers to the application category of an application program associated with the first interface element. When the first interface element is an application program icon, the application category associated with the first interface element refers to the application category associated with the corresponding application program of the application program icon.

Through the implementation of this method, during the process of adding the first interface element to the element folder, the user only needs to trigger the add operation for the first interface element. The electronic device may automatically determine the corresponding element folder of the first interface element, and add the first interface element to the determined element folder. The electronic device may also display the element folder where the first interface element is added. This greatly improves the convenience of adding interface elements.

In some embodiments, the size of the first interface element inside the element folder may be the same as or different from its size outside the folder, which is not limited in the present disclosure.

Through the implementation of this method, by automatically and adaptively adjusting the size of the second interface element in the element folder, the first interface element may be successfully added to the element folder without changing the size of the element folder. It may be further ensured that the element folder is always fully filled with interface elements. This increases the flexibility of adding interface elements, optimizes the desktop layout, and further meets user needs.

As shown in FIG. 3, FIG. 3 is a flowchart of a display method for an interface element in some embodiments of the present disclosure. The method for displaying interface elements as shown in FIG. 3 may include operations executed by the following blocks.

At block 301, in response to the add operation for the first interface element, a first display parameter of the element folder is obtained. The first display parameter includes the size of the element folder and a first element number. The first element number refers to a sum of a total number of the interface elements in the element folder and the first interface element.

For details about the add operation and the determination of the element folder, please refer to the description of the block 201, which will not be repeated here.

**In** some embodiments, after the element folder is created, the electronic device may store the size of the element folder and the number of the interface elements in the element folder. The electronic device may further associate the size of the element folder and the number of the interface elements in the element folder with the folder identifier of the element folder. The number of the interface elements in the element folder may be updated in real time.

Furthermore, the electronic device, based on the folder identifier of the element folder, may obtain the size of the element folder and the number of the interface elements in the element folder.

At block 302, based on the first display parameter, the second interface element in the element folder and a first adjustment size for each second interface element are determined.

After the first interface element in the element folder is added, each second interface element in the element folder displays based on the corresponding first adjustment size. When there are multiple second interface elements, each second interface element has its own corresponding first adjustment size.

In some embodiments, determining, based on the first display parameter, the second interface element in the element folder and the first adjustment size for each second interface element may include: determining, based on the first display parameter, a first layout style of the element folder after the first interface element adding; and determining, based on the first layout style and a layout style of the element folder before the first interface element is added, the second interface element and the first adjustment size for each second interface element.

In some embodiments, the electronic device may have multiple pre-set layout style sets, where each pre-set layout style set corresponds to an element folder of different sizes, and the number of the interface elements in each layout style set may vary.

Further, determining, based on the first display parameter, the first layout style of the element folder after the first interface element is added may include: determining a target layout style set that matches the size of the element folder from the multiple layout style sets, and determining a layout style that matches the first element number of the element folder from the target layout style set as the first layout style of the element folder after the first interface element is added.

At block 303, the first interface element is added to the element folder. After the first interface element in the element folder is added, each second interface element in the element folder is displayed based on the corresponding first adjustment size.

For example, taking a 4×2 element folder as an example, the following shows how the layout style of the element folder works.

When two interface elements are displayed, both are 2×2.

When three interface elements are displayed, one is 2×2, another one is 2×1, and the other is also 2×1.

When four interface elements are displayed, one is 2×2, one is 2×1, and two are 1×1.

When five interface elements are displayed, one is 2×2, and four are 1×1.

In conjunction with the above 4×2 element folder layout, the process of adding an interface element to the element folder will be explained.

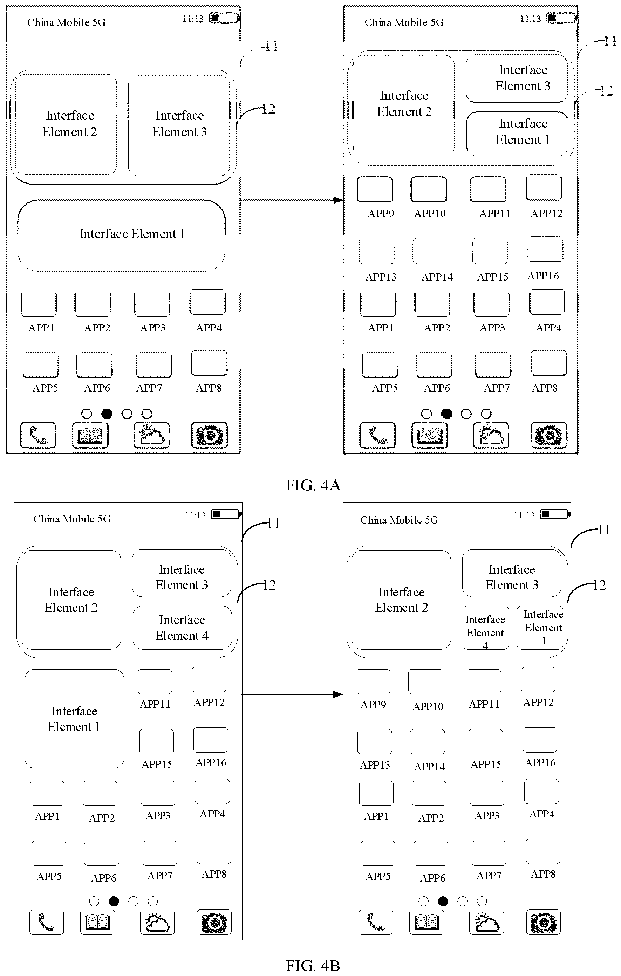

As shown in FIG. 4A, FIG. 4A is another illustration of adding an interface element in some embodiments of the present disclosure. The left image in FIG. 4A represents a desktop 11 before the interface element 1 is added. The desktop 11 includes a 4×2 element folder 12, with a 2×2 interface element 2 and a 2×2 interface element 3 inside the element folder 12. The desktop 11 also includes the interface element 1 outside the element folder. The right image in FIG. 4A represents a desktop 11 after the interface element 1 is added. The desktop 11 includes a 4×2 element folder 12, with a 2×2 interface element 2, a 2×1 interface element 3, and a 2×1 interface element 1 inside the element folder 12.

As shown in FIG. 4B, FIG. 4B, is another illustration of adding an interface element in some embodiments of the present disclosure. The left image in FIG. 4B represents a desktop 11 before the interface element 1 is added. The desktop 11 includes a 4×2 element folder 12, with a 2×2 interface element 2, a 2×1 interface element 3, and a 2×1 interface element 4 inside the element folder 12. The right image in FIG. 4B represents a desktop 11 after the interface element 1 is added. The desktop 11 includes a 4×2 element folder 12 with a 2×2 interface element 2, a 2×1 interface element 3, a 1×1 interface element 4, and a 1×1 interface element 1.

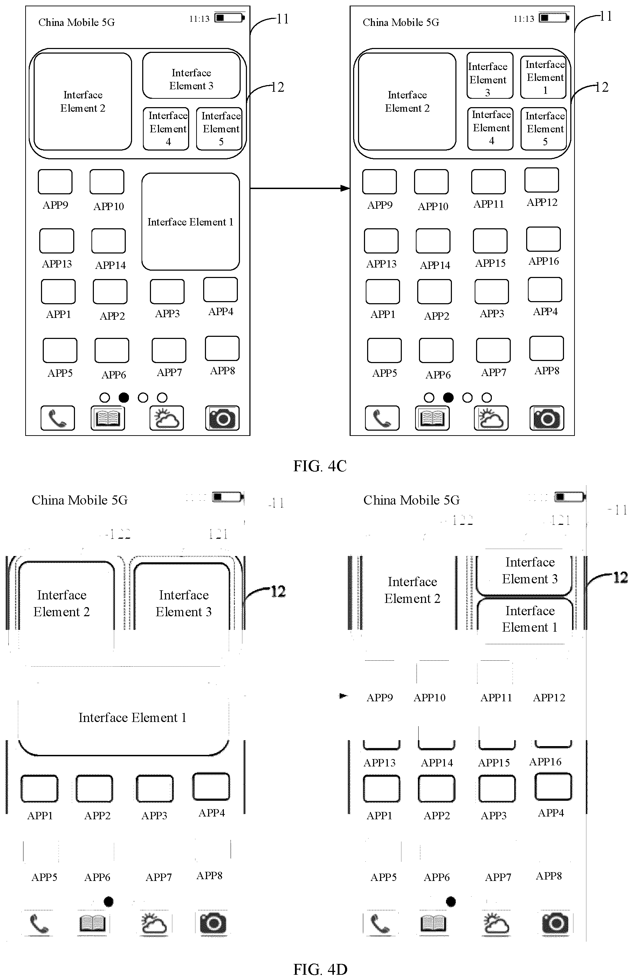

As shown in FIG. 4C, FIG. 4C, is another illustration of adding an interface element in some embodiments of the present disclosure. The left image in FIG. 4C represents a desktop 11 before the interface element 1 is added. The desktop 11 includes a 4×2 element folder 12, with a 2×2 interface element 2, a 2×1 interface element 3, a 1×1 interface element 4, and a 1×1 interface element 5 inside the element folder 12. The right image in FIG. 4C represents a desktop 11 after the interface element 1 is added. The desktop 11 includes a 4×2 element folder 12, with a 2×2 interface element 2, a 1×1 interface element 3, a 1×1 interface element 4, a 1×1 interface element 5, and a 1×1 interface element 1.

In some embodiments, when the number of the interface elements in the element folder is greater than or equal to a quantity threshold, the element folder may include a first region and a second region. The quantity threshold may be set by the user or automatically set by the electronic device, which is not limited in the present disclosure. For example, the quantity threshold for a 4×2 element folder may be 2.

In some embodiments, the first display parameter may further include a size of the first region and a sum of a total number of the interface elements in the first region and the first interface element.

Further, determining, based on the first display parameter, the second interface element in the element folder and the first adjustment size for each second interface element may include: determining, based on the first display parameter, the second interface element in the first region of the element folder and the first adjustment size for the second interface element.

In some embodiments, there may be multiple layout styles in the target layout style set that match the first element number of the element folder. Different layout styles correspond to different sizes of the first region and/or different numbers of interface elements in the first region.

Further, determining, based on the first display parameter, the second interface element in the first region of the element folder and the first adjustment size for the second interface element may include: obtaining, based on the size of the element folder and the sum of the total number of the interface elements in the element folder and the first interface element, multiple layout styles that match the first element number of the element folder; determining, based on the size of the first region and a sum of the total number of the interface elements in the first region and the first interface element, a second layout style that matches the first element number of the element folder from the multiple layout styles; and determining, based on the second layout style and the layout style of the element folder before the first interface element is added, the second interface element in the first region of the element folder and the corresponding first adjustment size for the second interface element.

In some embodiments, a size of the first region may be greater than or equal to a size of the second region.

For example, when the size of the first region is 2×2, the layout style of the 4×2 element folder works as follows.

When two interface elements are displayed, the two interface elements are placed in the first region and the second region, respectively.

When three interface elements are displayed, one 2×2 interface element is placed in the second region, and two 2×1 interface elements are placed in the first region.

When four interface elements are displayed, one 2×2 interface element is placed in the second region, one 2×1 interface element and two 1×1 interface elements are placed in the first region.

When five interface elements are displayed, one 2×2 interface element is placed in the second region, and four 1×1 interface elements are placed in the first region.

The process of adding an interface element is described below in conjunction with the layout style of the 4×2 element folder when the size of the first region is 2×2.

As shown in FIG. 4D, FIG. 4D is another illustration of adding an interface element in some embodiments of the present disclosure. The left image in FIG. 4D represents a desktop 11 before the interface element 1 is added. The desktop 11 includes a 4×2 element folder 12, with a 2×2 interface element 3 in the first region 121 of the element folder 12, a 2×2 interface element 2 in the second region 122 of the element folder 12, and the interface element 1 outside the element folder 12. The right image in FIG. 4D represents a desktop 11 after the interface element 1 is added. The desktop 11 includes a 4×2 element folder 12, with a 2×1 interface element 3 in the first region 121, a 2×1 interface element 1 in the first region 121, and a 2×2 interface element 2 in the second region 122.

In some embodiments, the element folder may include a display region and an operable region. The display region includes an interface element without an interactive functionality and/or an interface element with a disabled interactive functionality. The operable region includes an interface element that is interactable. It should be noted that interface elements without interactive functionality refer to interface elements without interactive controls, and interface elements with disabled interactive functionality refer to interface elements with disabled interactive controls.

In some embodiments, the size of the interface element in the display region is smaller than or equal to the size of the interface element in the operable region, which helps the user accurately operate the interface element in the operable region and reduces the likelihood of mistakenly triggering widgets.

In some embodiments, the first region may be the display region, and the second region may be the operable region.

In some embodiments, the interface element in the element folder may include a widget.

The element folder with a widget is explained below in conjunction with the drawings.

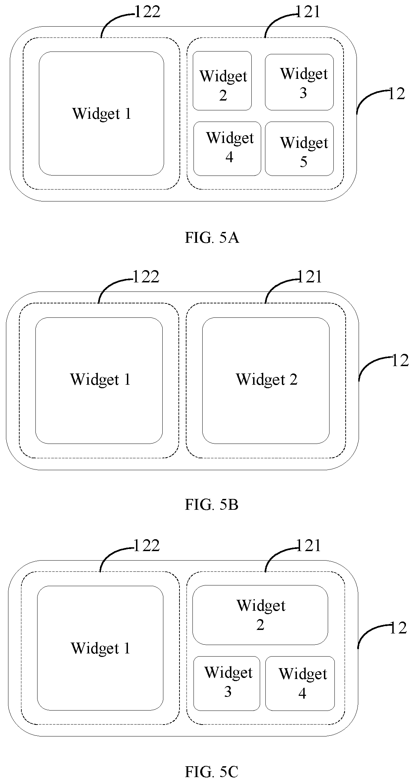

As shown in FIG. 5A, FIG. 5A is an illustration of an element folder in some embodiments of the present disclosure. As shown in FIG. 5A, the element folder includes the first region 121 and the second region 122. The first region 121 is the display region, and the second region 122 is the operable region. The second region 122 includes a 2×2 widget 1, and the first region 121 includes a 1×1 widget 2, a 1×1 widget 3, a 1×1 widget 4, and a 1×1 widget 5.

As shown in FIG. 5B, FIG. 5B is another illustration of an element folder in some embodiments of the present disclosure. As shown in FIG. 5B, the element folder includes the first region 121 and the second region 122. The first region 121 is the display region, and the second region 122 is the operable region. The second region 122 includes a 2×2 widget 1, and the first region 121 includes a 2×2 widget 2.

As shown in FIG. 5C. FIG. 5C is another illustration of an element folder in some embodiments of the present disclosure. As shown in FIG. 5B, the element folder includes the first region 121 and the second region 122. The first region 121 is the display region, and the second region 122 is the operable region. The second region 122 includes a 2×2 widget 1, and the first region 121 includes a 2×1 widget 2, a 1×1 widget 3, and a 1×1 widget 4.

In some embodiments, in response to a switch operation for a third interface element and a fourth interface element in the element folder, the third interface element may be switched from a first position to a second position for display, and the fourth interface element may be switched from the second position to the first position for display. The third interface element and the fourth interface element are any two interface elements in the element folder.

In some embodiments, a size of the third interface element and a size of the fourth interface element may be the same or different, which is not limited in the present disclosure.

In a case where the size of the third interface element and the size of the fourth interface element are different, when the third interface element and the fourth interface element switch positions, the size of the third interface element and the size of the fourth interface element may or may not change, which is not limited in the present disclosure.

In a case where the size of the third interface element and the size of the fourth interface element change, switching the third interface element from the first position to the second position for display and switching the fourth interface element from the second position to the first position for display may include: switching, based on a first size, the third interface element from the first position to the second position for display, and switching, based on a second size, the fourth interface element from the second position to the first position for display. The first size is the size of the fourth interface element when the fourth interface element is displayed at the second position, and the second size is the size of the third interface element when the third interface element is displayed at the first position.

Through the implementation of this method, the user may flexibly adjust the position of the interface element in the element folder according to personal preferences, thus further enhancing user experience.

The switch operation for the third interface element and the fourth interface element in the element folder may include, but is not limited to, a voice operation or a touch operation. For example, the switch operation may include the user sequentially clicking on the third interface element and the fourth interface element, or the user dragging the third interface element to the position of the fourth interface element.

Furthermore, when the interface element in the element folder includes the widget and the element folder includes the display region and the operable region, a condition for the respective regions where the first position and the second position are located may include: both the first position and the second position being placed in the operable region; both the first position and the second position being placed in the display region; or one of the first position and the second position being placed in the operable region, and the other of the first position and the second position being placed in the display region.

In some embodiments, in a case where the interface element is a widget, and when both the first position and the second position are in the display region, or both the first position and the second position are in the operable region, the first size and the second size are different. The same widget with different sizes may present different amounts of information. The larger the size is, the more information the widget can display. By triggering the switch operation for any two interface elements of different sizes in the same region, the user may easily change the size of the widget according to the user need.

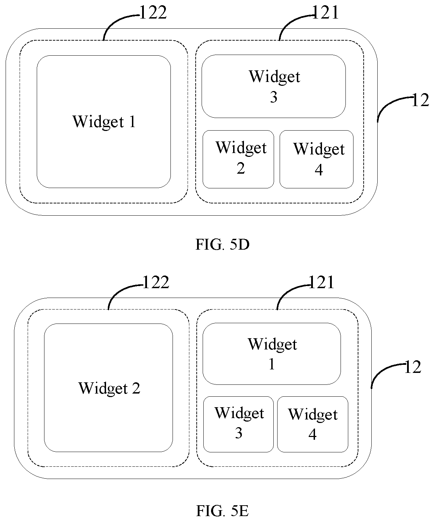

For example, when the third interface element is a widget 2 in FIG. 5C, and the fourth interface element is a widget 3 in FIG. 5C, then the element folder after responding to the switch operation for the widget 2 and the widget 3 is shown in FIG. 5D.

In some embodiments, in case that the first position is in the display region and the second position is in the operable region, after switching, based on the first size, the third interface element from the first position to the second position for display, further in response to an interactive operation for the third interface element, a corresponding function information of the third interface element may be outputted. Through the implementation of this method, the user may trigger the switch operation for any two interface elements in different regions, switching the interface element originally in the display region to the operable region, enabling the interface element to switch from non-interactable to interactable. For example, when the third interface element is the widget 2 in FIG. 5A and the fourth interface element is the widget 1 in FIG. 5C, the element folder after the switch operation for the widget 1 and the widget 2 is shown in FIG. 5E.

In some embodiments, in response to a move operation on the element folder, the element folder may be moved from its current position on the desktop to a third position indicated by the move operation. It should be noted that the size of the element folder remains unchanged during the moving process.

In some embodiments, the move operation on the element folder may be a drag operation. The third position indicated by the move operation refers to a position where the element folder stops being dragged.

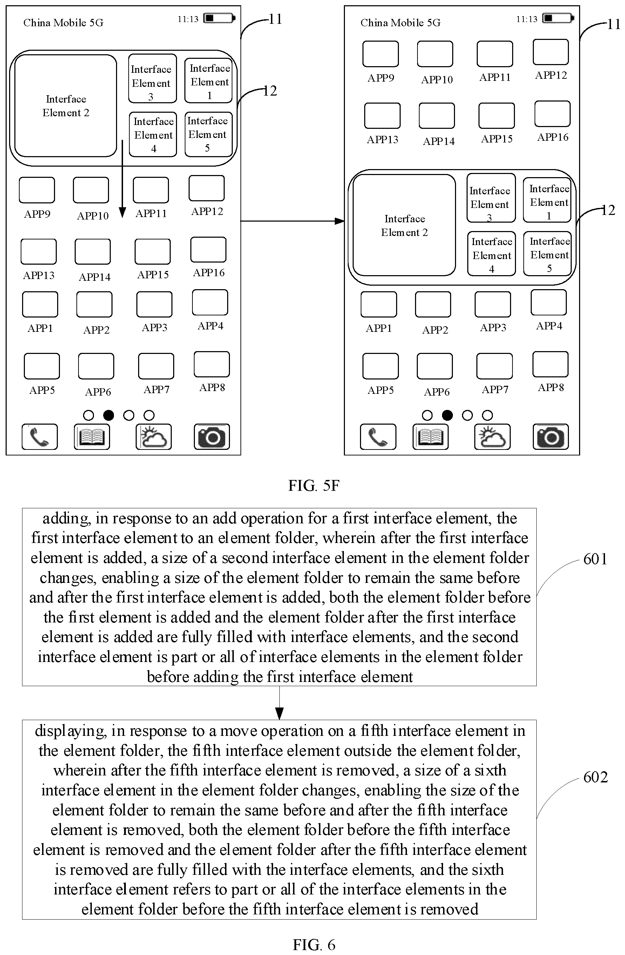

For example, as shown in FIG. 5F, FIG. 5F is an illustration of performing a move operation on an element folder.

Through the implementation of the above methods, the corresponding first adjustment size for each second interface element in the element folder may be determined based on the first display parameter of the element folder, and the size of the second interface element may be adjusted based on the corresponding first adjustment size during the process of adding the first interface element to the element folder, in this way, it is possible to achieve flexible adjustment of the size of the second interface element in the element folder.

As shown in FIG. 6, FIG. 6 is a flowchart of another display method for an interface element in some embodiments of the present disclosure. As shown in FIG. 6, the display method for an interface element may include operations executed by the following blocks.

At block 601, in response to the add operation for the first interface element, the first interface element is added to the element folder. After the first interface element is added, the size of the second interface element in the element folder changes, enabling the size of the element folder to remain the same before and after the first interface element is added and both the element folder before the first interface element is added and the element folder after the first interface element is added are fully filled with interface elements. The second interface element refers to part or all of interface elements in the element folder before the first interface element is added.

At block 602, in response to a remove operation on a fifth interface element in the element folder, the fifth interface element is displayed outside the element folder. After the fifth interface element is removed, a size of a sixth interface element in the element folder changes, enabling the size of the element folder to remain the same before and after the fifth interface element is removed and both the element folder before the fifth interface element is removed and the element folder after the fifth interface element is removed are fully filled with interface elements. The sixth interface element refers to part or all of the interface elements in the element folder before the fifth interface element is removed.

In some embodiments, based on a second display parameter of the element folder after the first interface element is added, a second adjustment size for the sixth interface element may be obtained. The second adjustment size includes the size of the element folder and a total number of the interface elements in the element folder excluding the fifth interface element after the first interface element is added.

It should be noted that the method of determining the second adjustment size for the sixth interface element may refer to the method of determining the first adjustment size for the second interface element as described above, which is not repeated here.

For example, the following explains the removal of interface elements in conjunction with the layout style of a 4×2 element folder.

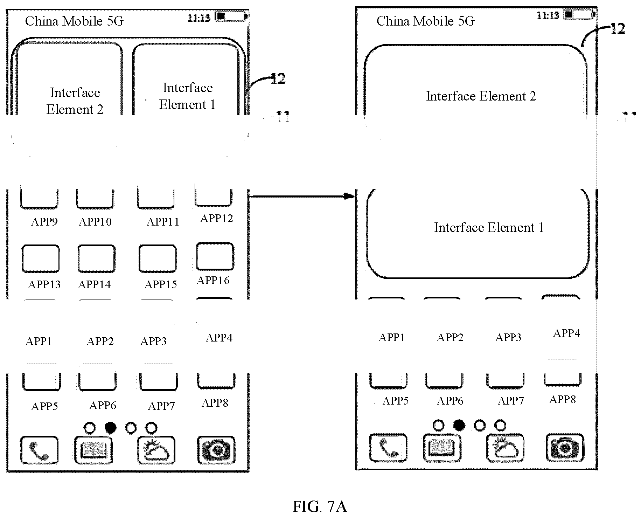

As shown in FIG. 7A, FIG. 7A is an illustration of removing an interface element in some embodiments of the present disclosure. The left image in FIG. 7A represents a desktop 11 before the interface element 1 is removed. The desktop 11 includes a 4×2 element folder 12, with a 2×2 interface element 1 and a 2×2 interface element 2 inside the element folder 12. The right image in FIG. 7A represents a desktop 11 after the interface element 1 is removed. The desktop 11 includes a 4×2 interface element 2, and a 4×2 interface element 1.

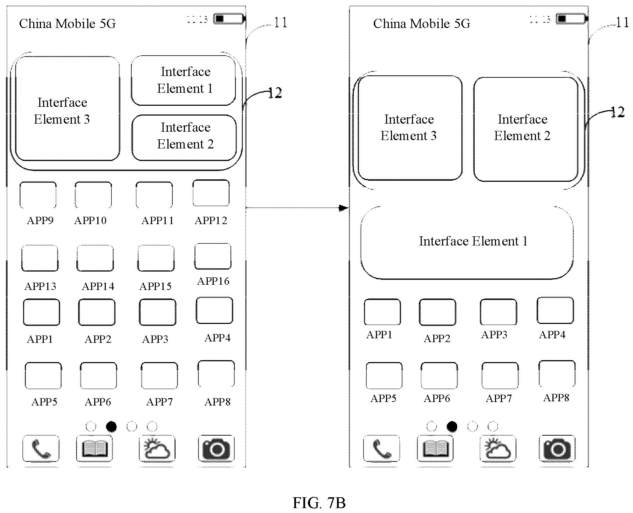

As shown in FIG. 7B, FIG. 7B is another illustration of removing an interface element in some embodiments of the present disclosure. The left image in FIG. 7B represents a desktop 11 before the interface element 1 is removed. The desktop 11 includes a 4×2 element folder 12, with a 2×1 interface element 1, a 2×1 interface element 2, and a 2×2 interface element 3 inside the element folder 12. The right image in FIG. 7B represents a desktop 11 after the interface element 1 is removed. The desktop 11 includes a 4×2 element folder 12, with a 2×2 interface element 2 and a 2×2 interface element 3 inside the element folder 12, and the interface element 1 outside the element folder 12.

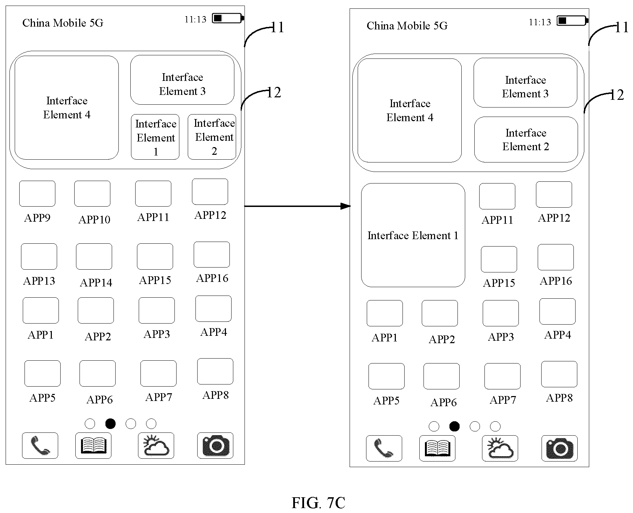

As shown in FIG. 7C, FIG. 7C is another illustration of removing an interface element in some embodiments of the present disclosure. The left image in FIG. 7C represents a desktop 11 before the interface element 1 is removed. The desktop 11 includes a 4×2 element folder 12, with a 1×1 interface element 1, a 1×1 interface element 2, a 2×1 interface element 3, and a 2×2 interface element 4 inside the element folder 12. The right image in FIG. 7C represents a desktop 11 after the interface element 1 is removed. The desktop 11 includes a 4×2 element folder 12, with a 2×1 interface element 2, a 2×1 interface element 3, and a 2×2 interface element 4 inside the element folder 12, and the interface element 1 outside the element folder 12.

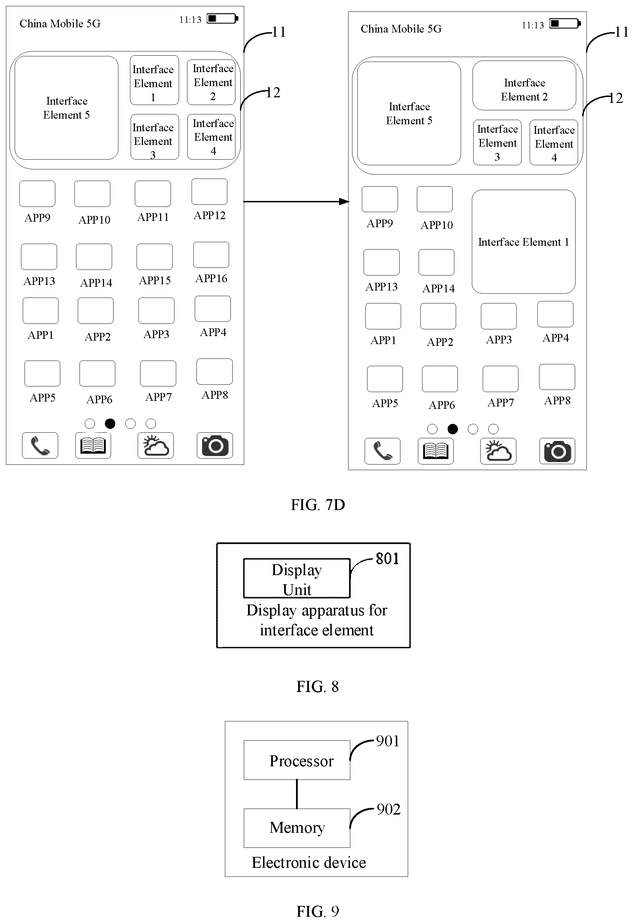

As shown in FIG. 7D, FIG. 7D is another illustration of removing an interface element in some embodiments of the present disclosure. The left image in FIG. 7D represents a desktop 11 before the interface element 1 is removed. The desktop 11 includes a 4×2 element folder 12, with a 1×1 interface element 1, a 1×1 interface element 2, a 1×1 interface element 3, a 1×1 interface element 4, and a 2×2 interface element 5 inside the element folder 12. The right image in FIG. 7D represents a desktop 11 after the interface element 1 is removed. The desktop 11 includes a 4×2 element folder 12, with a 2×2 interface element 5, a 2×1 interface element 2, a 1×1 interface element 3, and a 1×1 interface element 4 inside the element folder 12, and the interface element 1 outside the element folder 12.

Through the implementation of the above methods, when adding the first interface element, by automatically and adaptively adjusting the size of the second interface element in the element folder, the first interface element may be successfully added to the element folder without changing the size of the element folder. It may be further ensured that the element folder is always fully filled with interface elements. This increases the flexibility of adding interface elements, optimizes the desktop layout, and further meets user needs. When removing the fifth interface element from the element folder, the size of the sixth interface element in the element folder may be automatically and adaptively adjusted, ensuring that the size of the element folder remains unchanged after the fifth interface element is removed, and the element folder remains fully filled with interface elements, further optimizing the desktop layout.

As shown in FIG. 8, FIG. 8 is a schematic structural view of a display apparatus for interface elements in some embodiments of the present disclosure. As shown in FIG. 8, the device includes a display unit 801.

The display unit 801 is configured to add, in response to the add operation for the first interface element, the first interface element to the element folder. After the first interface element is added, the size of the second interface element in the element folder changes, enabling the size of the element folder to remain the same before and after the first interface element is added and both the element folder before the first interface element is added and the element folder after the first interface element is added are fully filled with interface elements. The second interface element refers to part or all of interface elements in the element folder before the first interface element is added.

In some embodiments, the display unit 801 may further be configured to generate, in response to the add operation for the first interface element, the element folder.

In some embodiments, the display unit 801 may further be configured to obtain a first display parameter of the element folder, where the first display parameter includes the size of the element folder and a first element number. The first element number refers to a sum of a total number of the interface elements in the element folder and the first interface element. Furthermore, the display unit 801 may be configured to determine, based on the first display parameter, the second interface element in the element folder and the first adjustment size for the second interface element.

The second interface element in the element folder after the first interface element is added is displayed based on the corresponding first adjustment size.

In some embodiments, the element folder includes the first region and the second region. The first display parameter further includes the size of the first region, and the sum of a total number of the interface elements in the first region and the first interface element.

The display unit 801 is configured to determine, based on the first display parameter, the second interface element in the element folder and the first adjustment size for the second interface element by means of: the display unit 801 being configured to determine, based on the first display parameter, the second interface element in the first region of the element folder and the first adjustment size for the second interface element.

In some embodiments, the element folder includes the display region and the operable region, where the display region includes interface elements without an interactive functionality and/or interface elements with disabled interactive functionality. The operable region includes an interface element that is interactable.

In some embodiments, the size of the interface element in the display region is smaller than or equal to the size of the interface element in the operable region.

In some embodiments, the interface element in the element folder may include a widget.

In some embodiments, the display unit 801 is further configured to switch, in response to the switch operation for the third interface element and the fourth interface element in the element folder, the third interface element from the first position to the second position for display, and the fourth interface element from the second position to the first position for display. The third interface element and the fourth interface element are any two interface elements in the element folder.

In some embodiments, the display unit 801 is configured to switch the third interface element from the first position to the second position for display and switch the fourth interface element from the second position to the first position for display by means of the display unit 801 being configured to switch, based on the first size, the third interface element from the first position to the second position for display, and switch, based on the second size, the fourth interface element from the second position to the first position for display. The first size is the size of the fourth interface element when displayed at the second position, and the second size is the size of the third interface element when displayed at the first position.

In some embodiments, the element folder includes the display region and the operable region. The display region includes an interface element without an interactive functionality and/or interface an interface element with a disabled interactive functionality. The operable region includes an interface element that is interactable. The first position is located in the display region and the second position is located in the operable region.

Furthermore, the display unit 801 is further configured to output, after switching the third interface element from the first position to the second position for display, in response to the interaction operation on the third interface element, the functional information of the third interface element based on the first size.

In some embodiments, the element folder includes the display region and the operable region. The display region includes an interface element without an interactive functionality and/or an interface element with a disabled interactive functionality. The operable region includes an interface element that is interactable. Both the first position and the second position are located in the display region.

In some embodiments, the display unit 801 is further configured to display, in response to the remove operation on the fifth interface element in the element folder, the fifth interface element outside the element folder. After the fifth interface element is removed, the size of the sixth interface element in the element folder changes, enabling the size of the element folder to remain the same before and after the fifth interface element is removed, and both the element folder before the fifth interface element is removed and the element folder after the fifth interface element is removed are fully filed with interface elements. The sixth interface element refers to part or all of the interface elements in the element folder before the fifth interface element is removed.

As shown in FIG. 9, FIG. 9 is a structural block diagram of an electronic device in some embodiments of the present disclosure. As shown in FIG. 9, the electronic device may include a processor 901 and a memory 902 coupled to the processor 901. The memory 902 may store one or more computer programs.

The processor 901 may include one or more processing cores. The processor 901 connects various parts within the electronic device through various interfaces and lines, and is configured to perform various functions of the electronic device and processes data by executing or performing instructions, programs, code sets, or instruction sets stored in the memory 902, and calling data stored in the memory 902. In some embodiments, the processor 901 may be implemented in at least one hardware form such as Digital Signal Processing (DSP), Field-Programmable Gate Array (FPGA), or Programmable Logic Array (PLA). The processor 901 may integrate one or more combinations of a Central Processing Unit (CPU), Graphics Processing Unit (GPU), and a modem. The CPU is primarily configured to handle the operating system, user interface, applications, etc. The GPU is configured to render and draw display content. The modem is configured to address wireless communication. It can be understood that the modem may not be integrated into the processor 901, but instead be implemented through a separate communication chip.

The memory 902 may include Random Access Memory (RAM), and may further include Read-Only Memory (ROM). The memory 902 may be configured to store instructions, programs, code, code sets, or instruction sets. The memory 902 may include a program storage area and a data storage area. The program storage area may store instructions for implementing the operating system, instructions for implementing at least one function (such as touch functionality, sound playback functionality, image playback functionality, etc.), and instructions for implementing the method in some embodiments of the present disclosure described above. The data storage area may further store data created by the electronic device when the electronic device is running.

In some embodiments of the present disclosure, the processor 901 further includes the following functions.

In response to the add operation for the first interface element, the first interface element is added to the element folder. After the first interface element is added, the size of the second interface element in the element folder changes, enabling the size of the element folder to remain the same before and after the first interface element is added, and both the element folder before the first interface element is added and the element folder after the first interface element is added are fully filled with interface elements. The second interface element refers to part or all of interface elements in the element folder before the first interface element is added.

In some embodiments of the present disclosure, the processor 901 further includes the following functions.

In response to the add operation for the first interface element, the element folder is generated.

In some embodiments of the present disclosure, the processor 901 further includes the following functions.

The first display parameter of the element folder is obtained. The first display parameter includes the size of the element folder and the first element number. The first element number refers to a sum of the total number of the interface elements in the element folder and the first interface element. Based on the first display parameter, the second interface element in the element folder and a first adjustment size for each second interface element are determined. Each second interface element in the element folder after the first interface element is added, is displayed based on the corresponding first adjustment size.

In some embodiments of the present disclosure, the element folder includes the first region and the second region. The first display parameters also include the size of the first region and the sum of a total number of the interface elements in the first region and the first interface element.

The processor 901 further includes the following functions.

Based on the first display parameter, the second interface element in the first region of the element folder and a corresponding first adjustment size for the second interface element are determined.

In some embodiments of the present disclosure, the element folder includes the display region and the operable region. The display region includes an interface element without an interactive functionality and/or an interface element with a disabled interactive functionality. The operable region includes an interface element that is interactable.

In some embodiments of the present disclosure, the size of an interface element in the display region is smaller than or equal to the size of an interface element in the operable region.

In some embodiments of the present disclosure, the interface element in the element folder may include a widget.

In some embodiments of the present disclosure, the processor 901 further includes the following functions.

In response to the switch operation for the third interface element and the fourth interface element in the element folder, the third interface element is switched from the first position to the second position for display, and the fourth interface element is switched from the second position to the first position for display. The third interface element and the fourth interface element are any two interface elements in the element folder.

In some embodiments of the present disclosure, the processor 901 further includes the following functions.

Based on the first size, the third interface element is switched from the first position to the second position for display, and based on the second size, the fourth interface element is switched from the second position to the first position for display. The first size is the size of the fourth interface element when the fourth interface element is displayed at the second position, and the second size is the size of the third interface element when the third interface element is displayed at the first position.

In some embodiments of the present disclosure, the element folder includes the display region and the operable region. The display region includes an interface element without an interactive functionality and/or an interface element with a disabled interactive functionality. The operable region includes an interface element that is interactable. The first position is located in the display region and the second position is located in the operable region.

The processor 901 further includes the following function. **In** response to the interaction operation for the third interface element, the functional information corresponding to the third interface element is outputted.

In some embodiments of the present disclosure, the element folder includes a display region and an operable region. The display region includes an interface element without an interactive functionality and/or an interface element with a disabled interactive functionality. The operable region includes an interface element that is interactable. Both the first position and the second position are located in the display region.

The processor 901 further includes the following functions.

In response to the remove operation on the fifth interface element in the element folder, the fifth interface element is displayed outside the element folder. After the fifth interface element is removed, the size of the sixth interface element in the element folder changes, enabling the size of the element folder to remain the same before and after the fifth interface element is removed and both the element folder before the fifth interface element is removed and the element folder after the fifth interface element is removed are fully filed with interface elements. The sixth interface element refers to part or all of the interface elements in the element folder before the fifth interface element is removed.

Some embodiments of the present disclosure disclose a computer-readable storage medium that stores a computer program, where when the computer program is executed by the processor, it enables the processor to implement some or all of the operations performed by the electronic device in the aforementioned embodiments.

Some embodiments of the present disclosure disclose a computer program product, which, when running on a computer, enables the computer to perform some or all of the operations performed by the electronic device in the aforementioned embodiments.

Some embodiments of the present disclosure disclose an application publishing platform, which is configured to publish a computer program product, where when the computer program product is run on a computer, it enables the computer to perform some or all of the steps performed by the electronic device in the aforementioned embodiments.

In the aforementioned embodiments, the implementation may be realized entirely or partially through software, hardware, firmware, or any combination thereof. When implemented with software, it can be realized entirely or partially in the form of the computer program product.

The computer program product includes one or more computer instructions. When the computer program instructions are loaded and executed on a computer, they enable the computer to generate all or part of the operations or functions according to the process or functionality of the embodiments of the present disclosure. The computer may be a general-purpose computer, a special-purpose computer, a computer network, or any other programmable device. The computer instructions may be stored in a computer-readable storage medium or transferred from one computer-readable storage medium to another. For example, computer instructions may be transmitted from a website, a computer, a server, or a data center via wired (such as coaxial cable, fiber optics, Digital Subscriber Line (DSL)) or wireless (such as infrared, wireless, microwave, etc.) methods to another website, computer, server, or data center. A computer-readable storage medium may be any available medium that a computer may store or a data storage device such as a server, a data center, etc., which integrates one or more available media. The available media may be magnetic media (such as floppy disks, disks, tapes), optical media (such as DVDs), or semiconductor media (such as Solid State Disks (SSD)), etc.

It should be understood by those skilled in the art that, for simplicity of the description, the specific working process of the systems, devices, and units described above may be referenced from the corresponding processes in the aforementioned method embodiments, which is not repeated here.

In some embodiments provided by the present disclosure, it should be understood that the disclosed systems, devices, and methods may be implemented in other ways. For example, the embodiments regarding the device described above are merely illustrative, and the division of units is just one logical functional division. In practical implementation, there may be other ways of division, such as multiple units or components being combined or integrated into another system, or some features can be omitted or not executed. Another point is that the couplings or direct couplings or communication connections discussed or shown may be indirect couplings or communication connections through interfaces, devices, or units, and may be electrical, mechanical, or in other forms.

Units described as separate components may or may not be physically separated, and components shown as units may or may not be physical units, meaning they may be located in one place or distributed across multiple network units. Depending on practical needs, some or all of the units can be selected to implement the objectives of some embodiments of the present disclosure.

Moreover, in each embodiment of the present disclosure, the functional units may be integrated into a processing unit, or they may exist physically separately, or two or more units may be integrated into one unit. The integrated units may be implemented in hardware form or as software functional units.

If the integrated units are implemented in the form of software functional units and sold or used as independent products, they may be stored in a computer-readable storage medium. Based on this understanding, the technical solutions of the present disclosure, or parts of the contribution to the existing technology, may be embodied in the form of software products. The computer software product is stored in a storage medium, including several instructions to make a computer device (which can be a personal computer, server, or network device) execute all or part of the operations of the method in the various embodiments of the present disclosure. The aforementioned storage mediums include USB drives, mobile disks, read-only memory (ROM), random access memory (RAM), magnetic disks, optical disks, and other media that may store program codes.

The above embodiments are merely for illustrating the technical solutions of the present disclosure and are not meant to limit them. Though the present disclosure has been described in detail with reference to the aforementioned embodiments, those skilled in the art should understand that the technical solutions described in these embodiments can be modified, or certain technical features can be equivalently substituted. These modifications or substitutions will not depart from the essence and scope of the technical solutions of the present disclosure.

## Claims

1. A display method for an interface element, comprising:
adding, in response to an add operation for a first interface element, the first interface element to an element folder;
wherein after the first interface element is added, a size of a second interface element in the element folder changes, enabling a size of the element folder to remain the same before and after the first interface element is added, both the element folder before the first interface element is added and the element folder after the first interface element is added are fully filled with interface elements, and the second interface element is part or all of interface elements in the element folder before the first interface element is added.

2. The method as claimed in claim 1, wherein the method further comprises:
generating, in response to the add operation for the first interface element, the element folder.

3. The method as claimed in claim 2, wherein the generating the element folder further comprising:
determining an application category associated with the first interface element;
using the element folder associated with the application category as the element folder for the first interface element.

4. The method as claimed in claim 1, wherein before the first interface element is added to the element folder, the method further comprises:
obtaining a first display parameter of the element folder, wherein the first display parameter comprises the size of the element folder and a first element number, the first element number is a sum of a total number of the interface elements in the element folder and the first interface element; and
determining, based on the first display parameter, the second interface element in the element folder and a first adjustment size for the second interface element;
wherein in the element folder after the first interface element is added, the second interface element is displayed based on the first adjustment size.

5. The method as claimed in claim 4, wherein the determining, based on the first display parameter, the second interface element in the element folder and the first adjustment size for the second interface element further comprises:
determining, based on the first display parameter, a first layout style of the element folder after the first interface element is added;
determining, based on the first layout style and a layout style of the element folder before the first interface element is added, the second interface element in the element folder and the first adjustment size for the second interface element.

6. The method as claimed in claim 5, wherein the determining, based on the first display parameter, the first layout style of the element folder after the first interface element is added further comprises:
determining, a target layout style set that matches the size of the element folder from a plurality of pre-set layout style sets; and
using a layout style that matches the first element number of the element folder from the target layout style set as the first layout style of the element folder after the first interface element is added.

7. The method as claimed in claim 4, wherein the element folder comprises a first region and a second region, the first display parameter further comprises a size of the first region, and a sum of a total number of the interface elements in the first region and the first interface element;
wherein the determining, based on the first display parameter, the second interface element in the element folder and the first adjustment size for the second interface element further comprises:
determining, based on the first display parameter, the second interface element in the first region of the element folder and the first adjustment size for the second interface element.

8. The method as claimed in claim 7, wherein the determining, based on the first display parameter, the second interface element in the first region of the element folder and the first adjustment size for the second interface element further comprises:
obtaining, based on the size of the element folder and the sum of the total number of the interface elements in the element folder and the first interface element, a plurality of layout styles that match the first element number of the element folder;
determining, based on the size of the first region and the sum of the total number of the interface elements in the element folder and the first interface element, a second layout style of the element folder after the first interface element is added, from the plurality of layout styles that matches the first element number of the element folder; and
determining, based on the second layout style and a layout style of the element folder before the first interface element is added, the second interface element in the first region of the element folder and the first adjustment size for the second interface element.

9. The method as claimed in claim 7, wherein the size of the first region is greater than or equal to a size of the second region.

10. The method as claimed in any of claims 1 to 9, wherein the element folder comprises a display region and an operable area, the display region comprises the interface element without an interactive functionality and/or the interface element with a disabled interactive functionality, the operable region comprises the interface element that is interactable.

11. The method as claimed in claim 10, wherein a size of the interface element in the display region is smaller than or equal to a size of the interface element in the operable region.

12. The method as claimed in any of claims 1 to 9, wherein the interface element in the element folder comprises a widget.

13. The method as claimed in any of claims 1 to 9, further comprising:
switching, in response to a switch operation for a third interface element and a fourth interface element in the element folder, the third interface element from a first position to a second position for display, and the fourth interface element from the second position to the first position for display, wherein the third interface element and the fourth interface element are any two interface elements in the element folder.

14. The method as claimed in claim 13, wherein the switching the third interface element from the first position to the second position for display, and the fourth interface element from the second position to the first position for display further comprises:
switching, based on a first size, the third interface element from the first position to the second position for display, and switching, based on a second size, the fourth interface element from the second position to the first position for display, wherein the first size is a size of the fourth interface element in condition of being displayed in the second position, and the second size is a size of the third interface element in condition of being displayed in the first position.

15. The method as claimed in claim 13, wherein the element folder comprises a display region and an operable area, the display region comprises the interface element without an interactive functionality and/or the interface element with a disabled interactive functionality, the operable region comprises the interface element that is interactable, and the first position is located in the display region, and the second position is located in the operable region;
wherein after switching the third interface element from the first position to the second position for display, the method further comprises:
outputting, in response to an interaction operation for the third interface element, a functional information of the third interface element.

16. The method as claimed in claim 14, wherein the element folder comprises a display region and an operable area, the display region comprises the interface element without an interactive functionality and/or the interface element with a disabled interactive functionality, the operable region comprises the interface element that is interactable, and both the first position and the second position are located in the display region.

17. The method as claimed in any of claims 1 to 9, further comprising:
displaying, in response to a remove operation on a fifth interface element, the fifth interface element outside the element folder, wherein after the fifth interface element is removed, a size of a sixth interface element in the element folder changes, enabling a size of the element folder to remain the same before and after the fifth interface element is removed, both the element folder before the fifth interface element is removed and the element folder after the fifth interface element is removed are fully filled with interface elements, and the sixth interface element is part or all of the interface elements in the element folder before the fifth interface element is removed.

18. The method as claimed in any of claims 1 to 9, wherein the method further comprises:
moving, in response to a move operation on the element folder, the element folder from a current position on a desktop to a third position indicated by the move operation.

19. A display apparatus for an interface element, comprising:
a display unit, configured to add, in response to an add operation for a first interface element, the first interface element to an element folder;
wherein after the first interface element is added, a size of a second interface element in the element folder changes, enabling a size of the element folder to remain the same before and after the first interface element is added, both the element folder before the first interface element is added and the element folder after the first interface element is added are fully filled with interface elements, and the second interface element is part or all of interface elements in the element folder before the first interface element is added.

20. An electronic device, comprising:
a memory, configured to store an executable program code; and
a processor, coupled to the memory;
wherein the processor is configured to execute the executable program code in the memory and enabled to implement the method as claimed in any one of claims 1 to 18 when executing the executable program code.

21. A computer-readable storage medium, storing an executable program code, wherein the executable program code is configured to be executed by a processor to implement the method as claimed in any one of claims 1 to 18.
